# EUROPÄISCHE PATENTSCHRIFT

(11) **EP 0 903 654 B1**
(45) Veröffentlichungstag und Bekanntmachung des Hinweises auf die Patenterteilung: **24.11.2004**
(21) Anmeldenummer: 98116930.3
(22) Anmeldetag: 08.09.1998
(51) Int. Cl.: G05B 19/418

(54) **Steuerungssystem für eine Palettieranlage**
Control system for a palletisation installation
Système de commande pour une installation de pallettisation

(30) Priorität: 17.09.1997 DE 19740775
(43) Veröffentlichungstag der Anmeldung: 24.03.1999
(73) Patentinhaber: Focke & Co. (GmbH & Co. KG), 27283 Verden (DE)
(72) Erfinder: Focke, Heinz, 27283 Verden (DE); Kühn, Thomas, 30167 Hannover (DE); Breitenstein, Christian, 28203 Bremen (DE)
(74) Vertreter: Bolte, Erich, Dipl.-Ing.

(56) Entgegenhaltungen:
- EP-A- 0 591 845
- US-A- 4 978 274
- US-A- 5 032 975
- PATENT ABSTRACTS OF JAPAN vol. 1996, no. 11, 29. November 1996 (1996-11-29) & JP 08 179807 A (TOPPAN PRINTING CO LTD), 12. Juli 1996 (1996-07-12)
- SEVERIN H G: "PALETTIEREN UND DEPALETTIEREN MIT ROBOTERN IN DER DRUCKINDUSTRIE PALLETIZING AND DEPALLETINZING WITH ROBOTS IN THE PRINTING INDUSTRY" , ZWF ZEITSCHRIFT FUR WIRTSCHAFTLICHE FERTIGUNG UND AUTOMATISIERUNG,DE,CARL HANSER VERLAG. MUNCHEN, VOL. 89, NR. 4, PAGE(S) 174-177 XP000441975 ISSN: 0947-0085 * Seite 176 *
- LIETZ J: "PALETTIEREN MIT INDUSTRIEROBOTERN" , FORDERN UND HEBEN,DE,KRAUSSKOPF VERLAG FUR WIRTSCHAFT. MAINZ, VOL. 41, NR. 12, PAGE(S) 1000-1001 XP000235292 ISSN: 0341-2636 * Abbildung 3 *

## Beschreibung

Die Erfindung betrifft ein Steuerungssystem für eine Palettieranlage mit mindestens einem Roboter für Roboter, wobei der Roboter und Palettieranlagenkomponenten über eine Datenübertragungseinrichtung mit einer Steuerungseinrichtung verbunden sind.

Steuerungssysteme für insbesondere Palettieranlagen mit Robotern sind hinlänglich bekannt. Bei bekannten Steuerungssystemen besteht die Steuerungseinrichtung aus drei unterschiedlichen Baugruppen, nämlich einem Roboterablaufsteuerungssystem, einer SPS-Enheit (SPS = speicherprogrammierbare Steuerung) sowie einem externen Bedienpult. Die Verknüpfung dieser drei Baugruppen untereinander sowie die Anbindung derselben an eine Datenübertragungseinrichtung erfordert einen großen Aufwand sowie Personaleinsatz, da die drei obigen Baugruppen auf der Hardwareseite umständlich miteinander verdrahtet werden müssen. Der ständige Datenaustausch zwischen diesen drei Baugruppen (Hardware) ist zudem sehr zeitaufwendig und begrenzt damit die Leistungsfähigkeit der Palettier-Anlage. Des weiteren ist von Nachteil, dass unterschiedliche Baugruppen sowie Programmiersprachen für diese Baugruppen beherrscht und gepflegt werden müssen. Des weiteren ist bei den bekannten Steuerungssystemen von Nachteil, dass infolge ihres begrenzten Speicherplatzes nur eine geringe Anzahl von durch den zu steuernden Robotern handzuhabenden Packmustem verarbeitet werden können. Bekannte Steuerungssysteme für Palettieranlagen erfordern demnach einen großen Aufwand bei Inbetriebnahme, Pflege und Wartung und sind des weiteren infolge des begrenzten Speicherplatzes insgesamt unflexibel

Aus der EP 0 591 845 A1 ist eine Palettieranlage mit einer Mehrzahl von Robotern, die ausschließlich durch eine SPS gesteuert sind, bekannt. Aus der US 5,032,975 ist ein komplexes Steuerungssystem für eine automatische Fertigungseinrichtung mit jeweils einer als Mikroprozessor-Board ausgeführten Steuerungseinheit für unterschiedliche Funktionalitäten der Fertigungseinrichtung bekannt. Diesen Steuerungseinheiten ist eine zentrale Steuerungseinheit mit einem eigenen Prozessor zugeordnet. Von der zentralen Steuerungseinheit werden Befehle an die einzelnen Steuerungseinheiten übermittelt, die dann unter Steuerung ihres jeweiligen lokalen Prozessors Motoren ansteuern, Sensor abfragen, etc.. Die Übermittlung der Steuerungsbefehle an die einzelnen Steuerungseinheiten erfolgt unter Steuerung eines Multitasking-Systems. Dabei sind unterschiedliche Tasks, z.B. zur Steuerung eines Roboters sowie weiterer Fertigungseinheiten, vorgesehen. Eine Task ist also ein Steuerungsprogramm für eine Fertigungseinheit. Zur Ansteuerung der Prozessperipherie, also z.B. eines Motors im Roboterarm, werden von der jeweiligen Task Daten an die jeweilige Steuerungseinheit übermittelt. In einem Fachartikel "Patettieren und Depalettieren mit Robotern in der Druckindustrie" von H. G Severin findet sich ein Hinweis auf eine als Robotersteuerung verwendete Kompaktsteuerung, in der CNC- und SPS-Funktionen verknüpft sind.

Hiervon ausgehend liegt der vorliegenden Erfindung das Problem zugrunde, ein mit geringem Aufwand inbetriebnehmbares, wartbares sowie pflegbares Steuerungssystem bereitzustellen, das des weiteren eine erhöhte Flexibilität hinsichtlich der Anzahl der zu verarbeitenden Packmuster aufweist.

Zur Lösung dieses Problems ist das erfindungsgemäße Steuerungssystem dadurch gekennzeichnet, dass die Steuerungseinrichtung als ein Mikroprozessorsystem, insbesondere als ein Industrie-Personalcomputer, ausgebildet ist, wobei das Mikroprozessorsystem sämtliche Steuerungseinrichtungs-Funktionen, insbesondere Funktionen einer Roboterablaufsteuerung, einer SPS und eines Bedienpults, zur Steuerung der Palettieranlagen realisiert und wobei zur Realisierung der Steuerungseinrichtungs-Funktionen einer SPS eine SPS-Task zyklisch in einem einstellbaren Echtzeittakt durchlaufen wird.

Durch die Verwendung eines ungeteilten Mikroprozessorsystems als Steuerungseinrichtung wird der Speicherplatz des Steuerungssystems erheblich vergrößert, weil die Speicherkapazität nicht durch die endliche Speichergröße einzelner Hardwarebaugruppen eingeschränkt wird. Es können demnach eine nahezu beliebige Anzahl von Packmustern verarbeitet werden. Hierdurch erhöht sich die Flexibilität des Steuerungssystems. Da des weiteren das Mikroprozessorsystem sämtliche Steuerungseinrichtungs-Funktionen, insbesondere die Funktionen der Roboterablaufsteuerung, der SPS und des Bedienpults, softwaremäßig realisiert, muss nur noch lediglich eine Baugruppe, nämlich das Mikroprozessorsystem, mit der Datenübertragungseinrichtung verdrahtet werden. Hierdurch ist das Steuerungssystem mit geringerem Aufwand inbetriebnehmbar, wartbar sowie pflegbar.

Vorzugsweise sind die Funktionen der Roboterablaufsteuerung und des Bedienpults gemeinsam als eine erste Steuerungskomponente auf dem Mikroprozessorsystem softwaremäßig realisiert. Die Funktionen der SPS sind als Teil einer zweiten Steuerungskomponente ebenfalls auf dem Mikroprozessorsystem softwaremäßig realisiert. Hieraus folgt, daß auf dem Mikroprozessorsystem lediglich zwei als Software realisierte Steuerungskomponenten beherrscht und gepflegt werden müssen. Auch hierdurch vereinfacht sich die Inbetriebnahme, die Pflege und die Wartung des Steuerungssystems erheblich.

Bevorzugte Weiterbildungen der Erfindung ergeben sich aus den Unteransprüchen und der Beschreibung. Anhand der Zeichnung wird ein Ausführungsbeispiel der Erfindung näher erläutert. In der Zeichnung zeigen:
- Fig. 1: eine schematisierte Darstellung einer Palettier-Anlage aus Steuerungseinrichtung, Palettier-Roboter mit Greifer sowie Zuführtisch mit Kippeinrichtung,
- Fig. 2: ein schematisiertes Blockschaltbild eines Steuerungssystems für die Palettier-Anlage, inklusive des Palettier-Roboters,
- Fig. 3: ein schematisiertes Blockdiagramm für die Konfiguration des Steuerungssystems,
- Fig. 4: ein schematisiertes Blockdiagramm für das Laufzeitverhalten des Steuerungssystems,
- Fig. 5: ein weiteres schematisiertes Blockschaltbild eines Steuerungssystems für die Palettier-Anlage, inklusive des Palettier-Roboters, und
- Fig. 6: ein schematisiertes Blockschaltbild zweier SPS-Tasks sowie eines Echtzeitkerns.

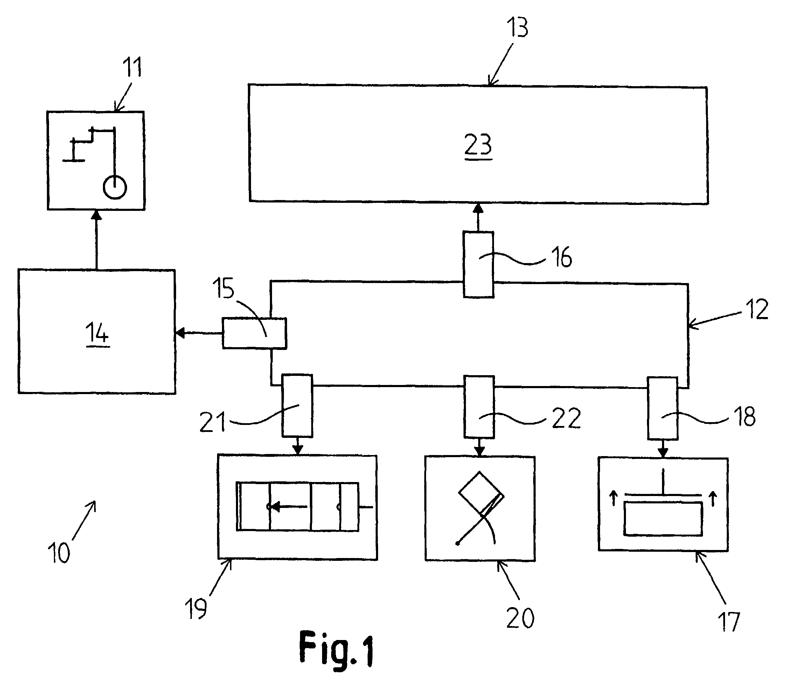

Fig. 1 zeigt schematisiert das Hardware-Konzept eines Steuerungssystems 10 für eine Palettieranlage mit Roboter, wie beispielsweise in US 5 348 440 sowie US 5 232 332 beschrieben. Der Palettier-Roboter 11 ist über eine Datenübertragungseinrichtung 12 mit einer Steuerungseinrichtung 13 verbunden. Gemäß Fig. 1 ist hierzu der Palettier-Roboter 11, nämlich dessen Motoransteuerung 14, über ein I/O-Modul (Input/Output-Modul) 15 an der Datenübertragungseinrichtung 12 gekoppelt. Die Steuerungseinrichtung 13 ist ihrerseits ebenfalls über ein 1/0-Modul 16 an der Datenübertragungseinrichtung 12 gekoppelt. Neben der Motoransteuerung 14 des Palettier-Roboters 11 ist auch ein Greifer 17 des Palettier-Roboters 11 über ein entsprechendes I/O-Modul 18 an der Datenübertragungseinrichtung 12 gekoppelt. Zusätzlich zur Motoransteuerung 14 und zum Greifer 17 des Palettier-Roboters 11 hängen auch ein Zuführtisch 19 für vom Palettier-Roboter handzuhabende Packmuster sowie eine auf dem Zuführtisch 19 montierte Kippeinrichtung 20 über entsprechende I/O-Module 21, 22 an der Datenübertragungseinrichtung 12. Auf gleiche Weise können auch weitere Komponenten der Palettieranlage wie zum Beispiel Palettenförderer, Palettenhubtische angekoppelt werden. Die Datenübertragungseinrichtung 12 ist bevorzugt als Lichtwellenleiter-Bussystem (LWL-Bus) ausgebildet.

Die Steuerungseinrichtung 13 des Steuerungssystems 10 ist erfindungsgemäß als Mikroprozessorsystem, nämlich als ein Industrie-Personalcomputer 23, ausgebildet. Der Industrie-Personalcomputer 23 realisiert sämtliche Steuerungseinrichtungs-Funktionen zur Steuerung der Palettieranlage mit dem Palettier-Roboter 11. Hierzu gehören Funktionen einer Roboterablaufsteuerung, einer speicherprogrammierbaren Steuerung (SPS) und eines Bedienpults. Diese Funktionen sind auf dem Industrie-Personalcomputer 23 allesamt softwaremäßig realisiert. Bei dem erfindungsgemäßen Steuerungssystem 10 muß demnach zur Steuerung der Palettieranlage lediglich der Industrie-Personalcomputer 23 als Steuerungseinrichtung 13 an die Datenübertragungseinrichtung 12 angekoppelt werden. Dies ist mit geringem Verdrahtungsaufwand möglich. Der Industrie-Personalcomputer 23 ersetzt die bei bislang bekannten Steuerungssystemen erforderlichen drei separaten Baugruppen Roboterablaufsteuerung, SPS-Einheit sowie externes Bedienpult.

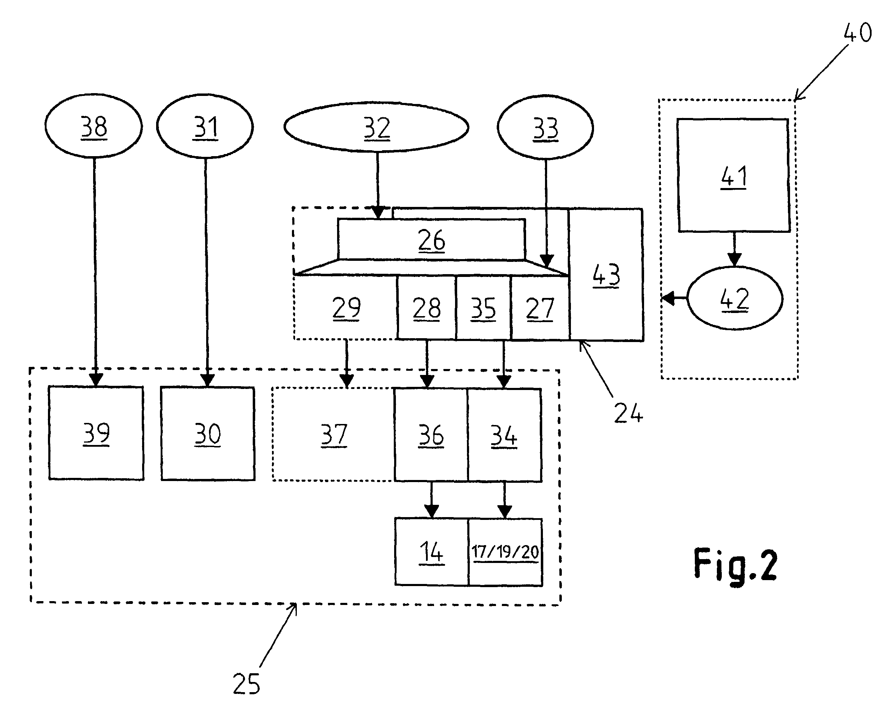

Fig. 2 zeigt ein schematisiertes Blockschaltbild für die auf dem Industrie-Personalcomputer 23 als Software realisierten Funktionen zur Steuerung der Palettieranlage. Als eine erste Steuerungskomponente 24 sind auf dem Industrie-Personalcomputer 23 gemeinsam die Funktionen der Roboterablaufsteuerung sowie des Bedienpults realisiert. Die Funktionen der SPS hingegen sind als Teil einer zweiten Steuerungskomponente 25 auf dem Industrie-Personalcomputer 23 realisiert. Erste Steuerungskomponente 24 sowie zweite Steuerungskomponente 25 sind auf dem Industrie-Personalcomputer 23 unabhängig voneinander realisiert.

Kernstück der ersten Steuerungskomponente 24 ist ein Roboterprogrammiersprache-Interpreter, insbesondere ein IRL-Interpreter 26. Der IRL-Interpreter (Industrial Robot Language-Interpreter) realisiert Funktionen der Roboterablaufsteuerung und des Bedienpults softwaremäßig. Zur Realisierung der Bedienpult-Funktionen verfügt der IRL-Interpreter über ein Bedienpult-Modul 27. Die Funktionen der Roboterablaufsteuerung werden durch ein Positionierungsmodul 28 sowie ein Modul 29 für Zusatzfunktionen realisiert. Mit Hilfe des Moduls 29 für die Zusatzfunktionen kann zum Beispiel der Palettier-Roboter 11 zeitoptimiert positioniert werden.

Bei der zweiten Steuerungskomponente 25 handelt es sich um eine Echtzeitplattform, die demnach im Echtzeittakt arbeitet. Teil der zweiten Steuerungskomponente 25 ist ein SPS-Compiler 30, der Funktionen der SPS realisiert.

Sowohl der IRL-Interpreter 26 als auch der SPS-Compiler 30 sind über Dateien an den konkret zu steuernden Palettier-Roboter 11 anpaßbar. Beim SPS-Compiler handelt es sich hierbei um die SPS-Datei 31. Beim IRL-Interpreter handelt es sich um die Dateien 32, 33. Die Datei 32 wird auch als IRL-Programmdatei bezeichnet, die Datei 33 hingegen als Bedienpultdatei.

Erste Steuerungskomponente 24 sowie zweite Steuerungskomponente 25 kommunizieren über entsprechende Software-Schnittstellen. Eine vom SPS-Compiler 30 erzeugte SPS-Task 34 wird von einem separaten SPS-Modul 35 des IRL-Interpreters 26 aufgerufen. Die SPS-Task 34 der zweiten Steuerungskomponente 25 sowie das SPS-Modul 35 der ersten Steuerungskomponente 24 tauschen hierbei Daten aus. Ein weiterer Datenaustausch zwischen der ersten Steuerungskomponente 24 sowie der zweiten Steuerungskomponente 25 erfolgt zwischen dem Positionierungs-Modul 28 der ersten Steuerungskomponente 24 und einer Positionierungs-Task 36 der zweiten Steuerungskomponente 25. Des weiteren werden vom Modul 29 für Zusatzfunktionen der ersten Steuerungskomponente 24 über eine geeignete Schnittstelle Daten an ein Modul 37 der zweiten Steuerungskomponente 25 hin- und herübertragen.

Mit Hilfe der vom SPS-Compiler 30 erzeugten SPS-Task 34 werden sämtliche Peripheriekomponenten der Palettieranlage nämlich der Greifer 17, der Zuführtisch 19 sowie die Kippeinrichtung 20 etc. gesteuert. Des weiteren wird zum Beispiel der Notauskreis für den Zuführtisch 19 sowie den Greifer 17 überwacht. Die SPS-Task 34 wird hierbei zyklisch in einem einstellbaren Echtzeittakt durchlaufen. Der IRL-Interpreter 26 hingegen realisiert unter anderem die Roboterablaufsteuerung. Im Gegensatz zum SPS-Compiler 30 arbeitet der IRL-Interpreter 26 nicht im Echtzeittakt. Auch finden beim IRL-Interpreter 26 keine zyklischen Wiederholungen statt. Der IRL-Interpreter erzeugt Funktionsaufrufe für die SPS-Task 34 sowie die Positionierungs-Task 36. Funktionen des Bedienpults sind als Bedienpult-Modul 27 im IRL-Interpreter realisiert. Nach jedem IRL-Befehl wird das Bedienpult aufgerufen.

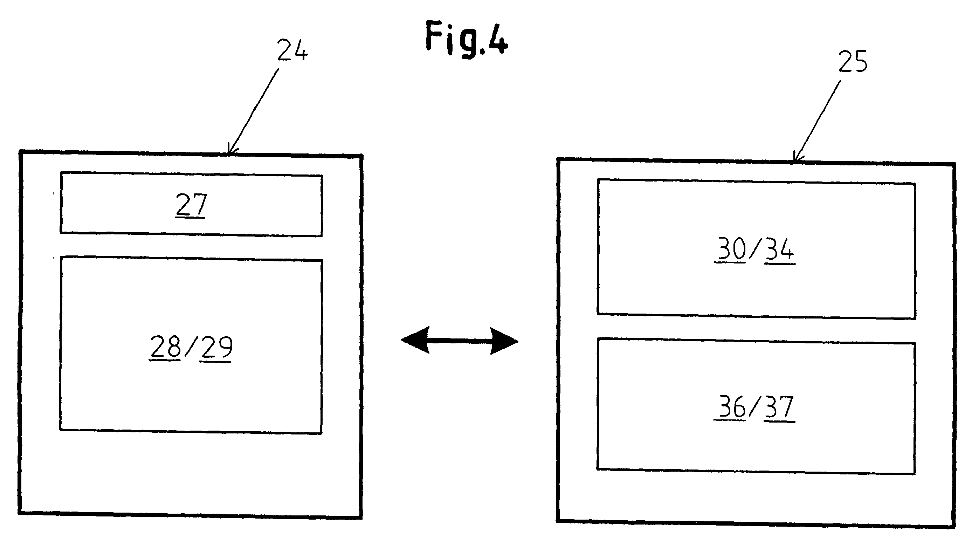

Das Laufzeitverhalten des erfindungsgemäßen Steuerungssystems zeigt Fig. 4. Im Zusammenhang mit Fig. 4 sei nochmals angemerkt, daß die SPS-Funktionen stets unabhängig von den durch den IRL-Interpreter 26 realisierten Funktionen ablaufen. Der IRL-Interpreter 26 der ersten Steuerungskomponente 24 arbeitet alle IRL-Befehle durch das Positionierungs-Modul 28 sowie das Modul 29 für Zusatzfunktionen kontinuierlich ab. Hierbei wird die Positionierungs-Task 36 bzw. das Modul 37 aufgerufen, die die vom IRL-Interpreter 26 erzeugten Befehle übernehmen und echtzeitfähige Steuerungsbefehle für den Palettier-Roboter 11 generieren. Von der im Echtzeitmodus arbeitenden Positionierungs-Task 36 werden die Positionierungsbefehle über das I/O-Modul (Input/Output-Modul) 15 an die Motoransteuerung 14 des Palettier-Roboters 11 übergeben. Analog erzeugt die SPS-Task 34 echtzeitfähige Steuerungsbefehle für den Greifer 17 des Palettier-Roboters 11 sowie für den Zuführtisch 19 und die Kippeinrichtung 20. Die Datenübertragung erfolgt über die 1/0-Module 18, 21 sowie 22.

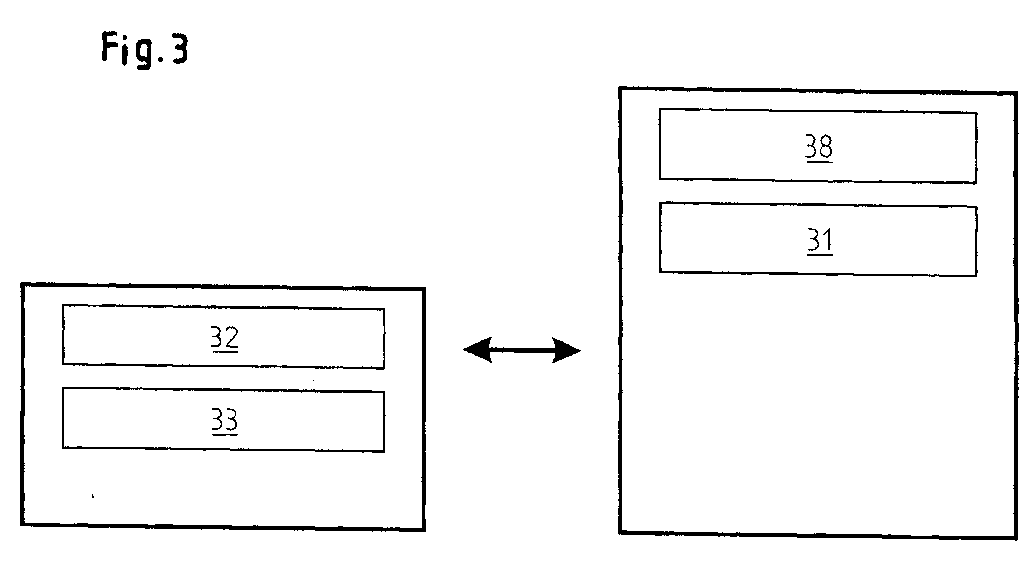

Bei der Konfiguration des Steuerungssystems wird gemäß Fig. 3 vorgegangen. In einem ersten Schritt werden in einer Datei 38, die auch als Konfigurations-Datei bezeichnet wird, Maschinendaten der zu steuernden Palettieranlage inklusive des Roboters 11, seines Greifers 17, des Zuführtischs 19 sowie der Kippeinrichtung 20 eingestellt. Darauffolgend wird in einem zweiten Schritt in der SPS-Datei 31 ein entsprechendes SPS-Programm geschrieben. Die Dateien 31, 38 dienen demnach der Konfiguration der zweiten Steuerungskomponente 25, die im Echtzeittakt arbeitet. In einem dritten Schritt wird in der Datei 32, nämlich in der IRL-Programmdatei ein entsprechendes IRL-Programm erstellt. Erst im Anschluß hieran wird in einem vierten Schritt in der Datei 33 eine Konfiguration für das Bedienpult vorgenommen. Die in der Datei 38 eingestellten Maschinendaten für den zu steuernden Palettier-Roboter 11 sowie die Peripheriekomponenten der Anlage werden über eine geeignete Schnittstelle der zweiten Steuerungskomponente 25 übergeben und in einem entsprechenden Modul 39 derselben zur Weiterverarbeitung bereitgehalten.

Die Anpassung des Steuerungssystems an die vom zu steuernden Palettier-Roboter 11 handzuhabenden Packmuster erfolgt üblicherweise über eine dritte Steuerungskomponente 40. Hierbei handelt es sich vorzugsweise um einen externen Personalcomputer. Die dritte Steuerungskomponente 40 umfaßt ein vom Endanwender frei programmierbares Palettiersystem 41, mit Hilfe dessen eine Datei 42 für Packmuster erzeugbar ist. Bei der dritten Steuerungskomponente handelt es sich um einen externen PC mit einem off-line Palettiersystem. Die Datei 42 für die Packmuster wird von einem den IRL-Interpreter 26 zugeordneten Datenspeicher 43 eingelesen. Da der IRL-Interpreter 26 wie bereits mehrfach dargestellt auf einem Industrie-Personalcomputer realisiert ist, verfügt der Datenspeicher 43 über eine sehr große Kapazität, so daß nahezu eine beliebig große Anzahl von Dateien 42 für Packmuster gespeichert und verarbeitet werden kann.

Alternativ ist es jedoch auch möglich, die Datei 42 im Teach-Verfahren direkt am IRL-Interpreter 26 zu erzeugen.

Die bisher beschriebene Robotersteuerung, insbesondere das in Fig. 2 gezeigte Blockschaltbild, ist für ein seiner Natur nach nicht multitaskingfähiges Betriebssystem (z. B. DOS) bzw. ein Single-Task-Betriebssystem ausgelegt. Aus der Ausrichtung auf ein derartiges Single-Task-Betriebssystem ergibt sich eine monolithische Struktur der Software mit eingeschränkter Veränderbarkeit und Skalierbarkeit der Software im Hinblick auf bestimmte Anforderungen.

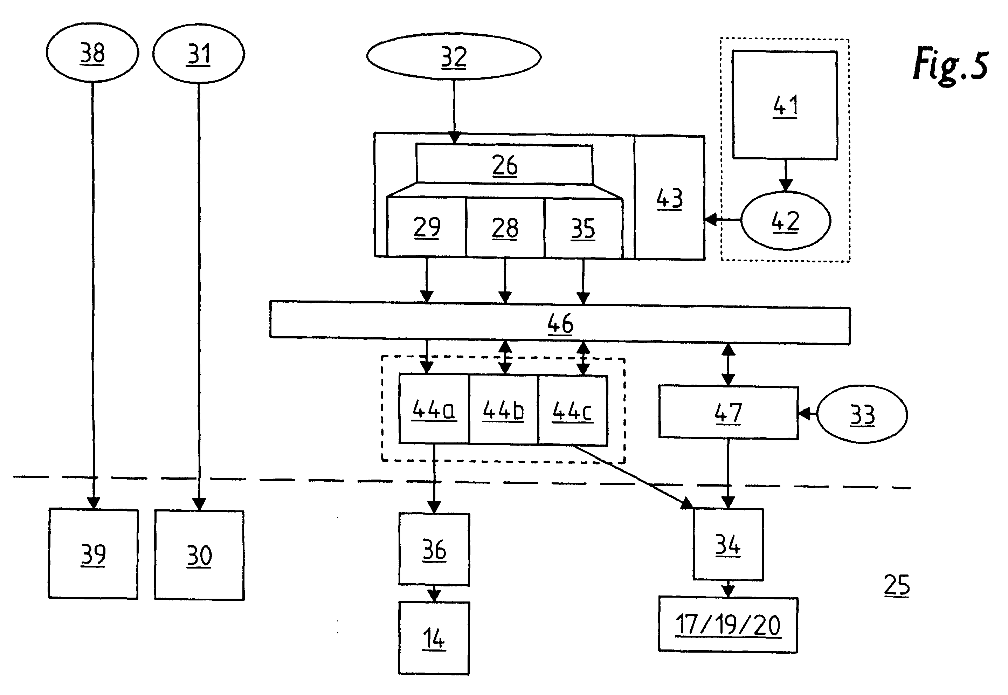

Fig. 5 beschreibt daher eine Robotersteuerung für ein multitaskingfähiges Betriebssystem, wie zum Beispiel Windows-NT. Ein derartiges multitaskingfähiges Betriebssystem ermöglicht einen wesentlich modulareren Aufbau der Software. Die untere, durch eine gestrichelte Linie abgeteilte Hälfte 25 entspricht dem in Fig. 2 als zweite Steuerungskomponente 25 beschriebenen Block, soweit nachfolgend nichts anderes erläutert ist.

Die erste Steuerungskomponente 24 gemäß Fig. 2 ist in Fig. 5 aufgeteilt in ein Interpretermodul 26 nebst Modul für Zusatzfunktionen 29, Positioniermodul 28 und SPS-Modul 35, sowie ein Roboter-Steuerungsmodul 44. Der Interpreter 26 dient nur zur Abarbeitung der IRL-Programme und besitzt keinerlei Bedienfunktionen. Statt dessen enthält das Interpretermodul 26 nebst Zusatzmodulen 28, 29 und 35 eine standardisierte Software-Schnittstelle 46, z. B. gemäß dem COM-Standard (COM = Component Object Model), zur Kommunikation mit anderen Programmen. Über diese Schnittstelle 46 werden Bewegungsbefehle, Benutzerausgaben etc. gesendet. Durch die Verwendung dieser standardisierten Software-Schnittstelle 46 kann man problemlos unabhängige Steuerungskomponenten dem Steuerungssystem hinzufügen. Dadurch läßt sich das System nahezu beliebig erweitern.

Das Steuerungsmodul 44 ist als Werkzeug für Techniker konzipiert, welche die Maschine einfahren bzw. in Betrieb nehmen. Es dient zur Anzeige von Benutzerausgaben und Programmfehlern. Diese Aufgaben werden beim Single-Task-basierten System gemäß Fig. 2 vom IRL-Modul ausgeführt. Außerdem wird im Steuerungsmodul 44 gemäß Fig. 5 die Auswertung bzw. Vorverarbeitung der vom IRL-Modul 26 gesendeten Bewegungsbefehle vorgenommen, was auf dem Single-Task-basierten System gemäß Fig. 2 in der zweiten Steuerungskomponente 25 erfolgt. Diese Auswertung der Bewegungsbefehle dient der Bewegungsvorbereitung und ist als im Steuerungsmodul 44 angeordneter Block 44a dargestellt, der Daten über die Schnittstelle 46 erhält. Der ebenfalls im Steuerungsmodul 44 angeordnete Block 44b stellt eine Benutzeroberfläche dar, die Daten zwischen Steuerungsmodul 44 und Schnittstelle 46 austauscht. Ferner ist ein Block 44c im Steuerungsmodul 44 integriert, der ein SPS-Modul darstellt, das Daten an die SPS-Task 34 übermittelt.

Das Roboter-Steuerungsmodul 44 ist außerdem das einzige Modul (neben dem Visualisierungsmodul bzw. Bedienpult 47), das mit einer Echtzeit-Task kommuniziert. Bei der Echtzeit-Task handelt es sich z. B. um die Positionierungs-Task 36 bzw. die SPS-Task 34.

Auch das Visualisierungsmodul bzw. Bedienpult 47 läuft als eigenständiges Programm. Dadurch ist man nicht, wie bei der Single-Task-basierten Steuerung, auf eine bestimmte, speziell abgestimmte Bedienpultsoftware angewiesen. Vielmehr kann man auf beliebige (Standard-)Programmpakete zurückgreifen. Das Visualisierungsmodul bzw. Bedienpult 47 erhält aus einer Datei 33 Konfigurationsdaten. Es ist entgegen dem in Fig. 2 dargestellten System losgelöst von der ersten Steuerungskomponente 24 als vierte Steuerungskomponente realisiert und kommuniziert mit der ersten Steuerungskomponente 24 über die Software-Schnittstelle 46.

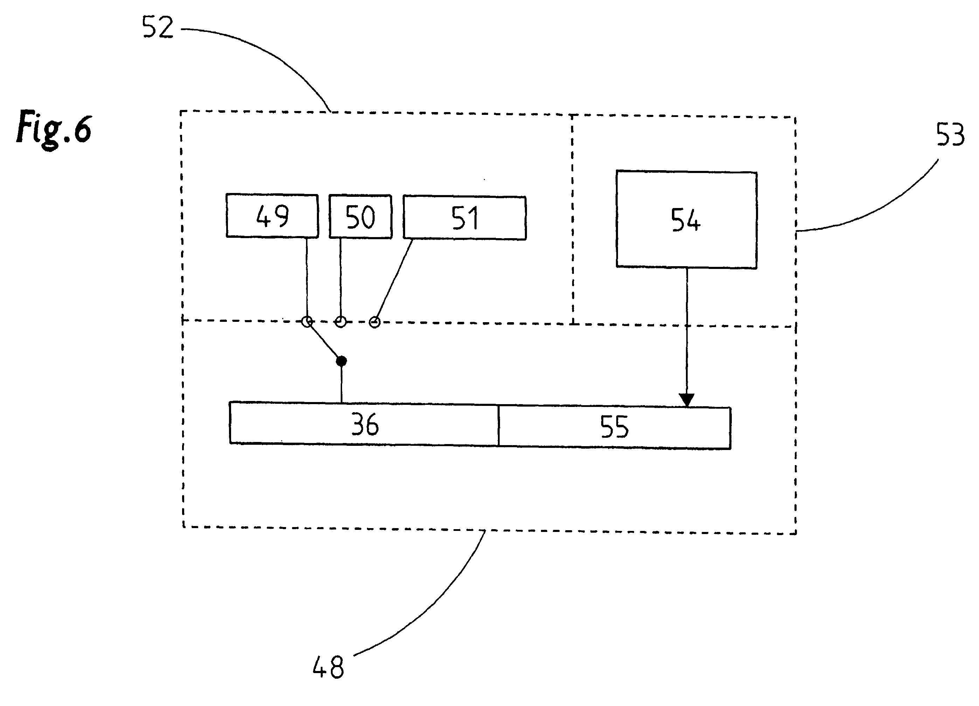

Für die Multi-Task-basierte Rotobersteuerung wird eine Echtzeitsoftware verwendet. Dabei ist es möglich, mehrere SPS-Tasks parallel laufen zu lassen. Durch die gegenüber der in Fig. 2 dargestellten geänderten Struktur der Echtzeitsoftware ergibt sich die Möglichkeit, die Struktur des in Fig. 2 dargestellten Positionierungs-Moduls zu ändern. Während das Positionierungs-Modul 28 beim in Fig. 2 dargestellten Single-Task-System in den Echtzeitkern eingebettet und nur durch ein Verändern und Neuerzeugen der gesamten Echtzeitsoftware zu ändern ist, wird das in Fig. 6 dargestellte Modul für das Multi-Task-System gemäß Fig. 5 nur in Form einer universell verwendbaren Basisfunktionalität in den Echtzeitkern 48 eingebettet. Dabei werden die Funktionalitäten für eine bestimmte Art des Verfahrens (bzw. Bewegens) der Roboterachsen, z. B. Linearverfahren 49, PTP (point to point)-Verfahren 50 oder anderer Verfahren 51, als zusätzliche SPS-Tasks 52 realisiert. Dadurch hat ein Entwickler die Möglichkeit, ohne eine Modifikation am Echtzeitkern 48 nur durch Ändern eines SPS-Programms die Positionier-Funktionalitäten zu verändern und zu ergänzen. Da die Positionierung der Achsen als eigenständiges SPS-Programm in einer eigenen Task läuft, ist trotzdem eine Kapselung gegenüber dem "normalen", zur Steuerung der Anlage erforderlichen SPS-Programm gegeben.

Ferner zeigt Fig. 6 eine zweite SPS-Task 53 für die Anlagensteuerung 54. Diese Anlagensteuerung 54 kommuniziert mit dem Echtzeitkern 48 und zwar mit dem Echtzeitmodul 55.

Gegenüber dem System gemäß Fig. 2 hat das in den Fig. 5 und 6 dargestellte System insbesondere den Vorteil, daß die SPS-Tasks 52, 53 nicht unmittelbar im Echtzeitkern 55 laufen. Dadurch braucht bei Änderungen der SPS-Tasks 52, 53 nicht zusätzlich der Echtzeitkern verändert zu werden. Auf diese Weise kann man die Zahl möglicher Fehlerquellen reduzieren.

Die Vorteile des neuen Steuerungssystems liegen auf der Hand. Durch die Verwendung des Industrie-Personalcomputers 23 als Steuerungseinrichtung 13 werden bei erhöhter Funktionalität und Geschwindigkeit des Palettier-Roboters 11 drei bislang separate Hardwarekomponenten ersetzt. Demnach kann die gesamte Palettier-Anlage von einer zentralen Steuerungseinrichtung aus programmiert und gesteuert werden. Durch die Verwendung des Industrie-Personalcomputers 23 als Steuerungseinrichtung 13 steht des weiteren eine nahezu unbegrenzte Speicherkapazität zur Verfügung. Es können daher eine Vielzahl von Dateien über Packmuster bereitgehalten werden. Hierdurch wird das Steuerungssystem sehr flexibel. Des weiteren sei angemerkt, daß sich der Industrie-Personalcomputer einfach und schnell an die Datenübertragungseinrichtung 12, insbesondere den LWL-Bus ankoppeln läßt. Der Verdrahtungsaufwand sowie Inbetriebnahmeaufwand des Steuerungssystems 10 ist demnach gering.

### Bezugszeichenliste:

- 10: Steuerungssystem
- 11: Palettier-Roboter
- 12: Datenübertragungseinrichtung
- 13: Steuerungseinrichtung
- 14: Motoransteuerung
- 15: I/O-Modul
- 16: 1/0-Modul
- 17: Greifer
- 18: 1/0-Modul
- 19: Zuführtisch
- 20: Kippeinrichtung
- 21: I/O-Modul
- 22: I/O-Modul
- 23: Industrie-Personalcomputer
- 24: Steuerungskomponente
- 25: Steuerungskomponente
- 26: IRL-Interpreter
- 27: Bedienpult-Modul
- 28: Positionierungs-Modul
- 29: Modul
- 30: SPS-Compiler
- 31: Datei
- 32: Datei
- 33: Datei
- 34: SPS-Task
- 35: SPS-Modul
- 36: Positionierungs-Task
- 37: Modul
- 38: Datei
- 39: Modul
- 40: Steuerungskomponente
- 41: Palettiersystem
- 42: Datei
- 43: Datenspeicher
- 44: Steuerungsmodul
- 44a: Bewegungsvorbereitung
- 44b: Benutzeroberfläche
- 44c: SPS-Modul
- 46: standardisierte Software-Schnittstelle
- 47: Visualisierungsmodul bzw. Bedienpult
- 48: Echtzeitkern
- 49: Linearverfahren
- 50: PTP-Verfahren
- 51: anderes Verfahren
- 52: SPS-Task
- 53: SPS-Task
- 54: Anlagensteuerung
- 55: Echtzeitmodul

## Patentansprüche

1. Steuerungssystem (10) für eine Palettieranlage mit mindestens einem Roboter (11),
wobei der mindestens eine Roboter (11) und Palettieranlagenkomponenten (17, 19, 20) über eine Datenübertragungseinrichtung (12) mit einer Steuerungseinrichtung (13) des Steuerungssystems (10) verbunden sind,
**dadurch gekennzeichnet,**
**dass** die Steuerungseinrichtung (13) als ein Mikroprozessorsystem, insbesondere als ein Industrie-Personalcomputer (23), ausgebildet ist,
wobei das Mikroprozessorsystem sämtliche Steuerungseinrichtungs-Funktionen,nämlich die Funktionen einer Roboterablaufsteuerung, einer speicherprogrammierbaren Steuerung (SPS) und eines Bedienpults, zur Steuerung der Palettieranlage softwaremäßig realisiert und
wobei zur Realisierung der Steuerungseinrichtungs-Funktionen einer SPS eine SPS-Task (34) zyklisch in einem einstellbaren Echtzeittakt durchlaufen wird.

2. Steuerungssystem nach Anspruch 1, **dadurch gekennzeichnet, dass** Funktionen der Roboterablaufsteuerung und des Bedienpults gemeinsam als eine erste Steuerungskomponente (24) auf dem Mikroprozessorsystem realisiert sind.

3. Steuerungssystem nach Anspruch 1 oder 2, **dadurch gekennzeichnet, dass** Funktionen der SPS als Teil einer zweiten Steuerungskomponente (25) auf dem Mikroprozessorsystem realisiert sind.

4. Steuerungssystem nach einem der Ansprüche 1 bis 3, **dadurch gekennzeichnet, dass** die erste Steuerungskomponente (24) und die zweite Steuerungskomponente (25) auf dem Mikroprozessorsystem unabhängig voneinander realisiert sind.

5. Steuerungssystem nach einem der Ansprüche 1 bis 4, **dadurch gekennzeichnet, dass** die zweite Steuerungskomponente (25) in einem Echtzeittakt realisiert ist.

6. Steuerungssystem nach einem der Ansprüche 1 bis 5, **dadurch gekennzeichnet, dass** die erste Steuerungskomponente (24) über Schnittstellen mit der zweiten Steuerungskomponente (25) kommuniziert, wobei die zweite Steuerungskomponente (25) echtzeitfähige Steuerungsbefehle für den Roboter (11) generiert.

7. Steuerungssystem nach einem der Ansprüche 1 bis 6, **dadurch gekennzeichnet, dass** die erste Steuerungskomponente (24) und die zweite Steuerungskomponente (25) über Dateien (31, 32, 33, 38) an die zu steuernde Palettieranlage mit Roboter (11) anpassbar sind.

8. Steuerungssystem nach einem der Ansprüche 1 bis 7, **gekennzeichnet durch** eine dritte Steuerungskomponente (40), wobei die dritte Steuerungskomponente (40) über eine Schnittstelle mit der ersten Steuerungskomponente (24) kommuniziert.

9. Steuerungssystem nach einem der Ansprüche 1 bis 8, **dadurch gekennzeichnet, dass** die erste Steuerungskomponente (24) über die dritte Steuerungskomponente (40) an die von der zu steuernden Palettieranlage handzuhabenden Packmuster oder dergleichen anpassbar ist.

10. Steuerungssystem nach Anspruch 1 oder einem der Ansprüche 3 bis 9, **dadurch gekennzeichnet, dass** Funktionen der Roboterablaufsteuerung als erste Steuerungskomponente (24) auf dem Mikroprozessorsystem und Funktionen des Bedienpults als vierte Steuerungskomponente (47) realisiert sind.

11. Steuerungssystem nach einem der Ansprüche 1 bis 10, **dadurch gekennzeichnet, dass** alle Steuerungskomponenten (24, 25, 40, 47) unabhängig voneinander realisiert sind.

12. Steuerungssystem nach einem der Ansprüche 1 bis 11, **dadurch gekennzeichnet, dass** es eine standardisierte Softwareschnittstelle (46) aufweist.

## Claims

1. Control system (10) for a palletizing installation at least one robot (11), where the at least one robot (11) and palletizing installation components (17, 19, 20) are linked to a control unit (13) of the control system (10) via a data transfer unit (12),
**characterized in that** the control unit (13) is configured as a microprocessor system, in particular as an industrial personal computer (23), wherein the microprocessor system carries out all control unit functions, in particular functions of a robot process control, a stored program control unit (PLC) and a control console for controlling the palletizing installation in terms of software and
Wherein a PLC task (34) is cycled in an adjustable real-time cycle in order to implement the control unit functions of a PLC.

2. Control system according to Claim 1, **characterized in that** the functions of the robot process control and of the control console are jointly carried out in the microprocessor system as a first control component (24).

3. Control system according to Claim 1 or 2, **characterized in that** functions of the PLC are carried out in the microprocessor system as part of a second control component (25)

4. Control system according to any of Claims 1 to 3, **characterized in that** the first control component (24) and the second control component (25) are carried out in the microprocessor system independently of each other.

5. Control system according to any of Claims 1 to 4, **characterized in that** the second control component (25) is carried out in a real-time cycle.

6. Control system according to any of claims 1 to 5, **characterized in that** the first control component (24) communicates with the second control component (25) by means of interfaces, with the second control component (25) generating real-time compatible control commands for the robot (11).

7. Control system according to any of Claims 1 to 6, **characterized in that** the first control component (24) and the second control component (25) can be adapted by means of files (31, 32, 33, 38) to the palletizing installation to be controlled with robot (11).

8. Control system according to any of Claims 1 to 7, **characterized by** a third control component (40), with the third control component (40) communicating with the first control component (24) by means of an interface.

9. Control system according to any of Claims 1 to 8, **characterized in that** the first control component (24) can be adapted to the pack samples or the like to be handled by the controlled palletizing installation by means of the third control component (40).

10. Control system according to Claim 1 or any of the Claims 3 to 9, **characterized in that** functions of the robot process control are carried out in the microprocessor system as the first control component (24) and that functions of the control console are carried out as the fourth control component (47).

11. Control system according to any of Claims 1 to 10, **characterized in that** all the control components (24, 25, 40, 47) are carried out independently of each other.

12. Control system according to any of the Claims 1 to 11, **characterized in that** a standardized software interface (46) is present.

## Revendications

1. Système de commande (10) pour une installation de palettisation comportant au moins un robot (11), le robot ou les robots (11) et des composants (17, 19, 20) de l'installation de palettisation étant reliés par un dispositif de transmission de données (12) à un dispositif de commande (13) du système de commande (10),
**caractérisé par le fait**
**que** le dispositif de commande (13) est un système à microprocesseur, en particulier un ordinateur individuel industriel (23),
le système à microprocesseur réalisant en logiciel, pour la commande de l'installation de palettisation, toutes les fonctions du dispositif de commande, à savoir les fonctions d'une commande séquentielle de robots, d'une commande par programme enregistré et d'un pupitre de commande, et
pour la réalisation des fonctions d'une commande par programme enregistré du dispositif de commande, une tâche de commande par programme enregistré (34) est passée de façon cyclique à un rythme en temps réel réglable.

2. Système de commande selon la revendication 1, **caractérisé par le fait que** des fonctions de la commande séquentielle de robots et du pupitre de commande sont réalisées ensemble sur le système à microprocesseur comme première composante de commande (24).

3. Système de commande selon l'une des revendications 1 et 2, **caractérisé par le fait que** des fonctions de la commande par programme enregistré sont réalisées sur le système à microprocesseur comme partie d'une deuxième composante de commande (25).

4. Système de commande selon l'une des revendications 1 à 3, **caractérisé par le fait que** la première composante de commande (24) et la deuxième composante de commande (25) sont réalisées sur le système à microprocesseur indépendamment l'une de l'autre.

5. Système de commande selon l'une des revendications 1 à 4, **caractérisé par le fait que** la deuxième composante de commande (25) est réalisée à un rythme en temps réel.

6. Système de commande selon l'une des revendications 1 à 5, **caractérisé par le fait que** la première composante de commande (24) communique par des interfaces avec la deuxième composante de commande (25), la deuxième composante de commande (25) produisant des ordres de commande du robot (11) pouvant être en réel.

7. Système de commande selon l'une des revendications 1 à 6, **caractérisé par le fait que** la première composante de commande (24) et la deuxième composante de commande (25) sont adaptables par des fichiers (31, 32, 33, 38) à l'installation de palettisation à robot (11) à commander.

8. Système de commande selon l'une des revendications 1 à 7, **caractérisé par** une troisième composante de commande (40), celle-ci communiquant par une interface avec la première composante de commande (24).

9. Système de commande selon l'une des revendications 1 à 8, **caractérisé par le fait que** la première composante de commande (24) est adaptable par l'intermédiaire de la troisième composante de commande (40) aux formes de paquets ou éléments semblables à manipuler par l'installation de palettisation à commander.

10. Système de commande selon la revendication 1 ou l'une des revendications 3 à 9, **caractérisé par le fait que** des fonctions de la commande séquentielle de robots sont réalisées sur le système à microprocesseur comme première composante de commande (24) et des fonctions du pupitre de commande sont réalisées comme quatrième composante de commande (47).

11. Système de commande selon l'une des revendications 1 à 10, **caractérisé par le fait que** toutes les composantes de commande (24, 25, 40, 47) sont réalisées indépendamment les unes des autres.

12. Système de commande selon l'une des revendications 1 à 11, **caractérisé par le fait qu'**il présente une interface logicielle normalisée (46).
